# EUROPEAN PATENT APPLICATION

(11) **EP 2 203 019 A1**
(43) Date of publication of application: **30.06.2010**
(21) Application number: 09180892.3
(22) Date of filing: 29.12.2009
(51) Int. Cl.: H04W 48/02, H04W 84/04

(54) **Position detection method, system and device**

(30) Priority: 29.12.2008 CN 200810246653
(71) Applicant: Huawei Technologies Co., Ltd., Longgang District, Shenzhen Guangdong 518129 (CN)
(72) Inventor: Hu, Guojie, 518129, Shenzhen Guangdong (CN); Wang, Xiaolin, 518129, Shenzhen Guangdong (CN)
(74) Representative: Charles, Glyndwr

(57) **Abstract**

In the field of communication technology, a position detection method, a position detection system, and a position detection device are provided. The method includes: acquiring address information of a broadband access device currently corresponding to a wireless access device; converting the address information into an identification of the broadband access device currently corresponding to the wireless access device; determining whether the identification of the broadband access device currently corresponding to the wireless access device is consistent with an identification of a broadband access device bound to the wireless access device; and if yes, a current position of the wireless access device is legal. The system includes a wireless access device, an access gateway, and a position detection device. The position detection on the wireless access device is realized by determining whether the identification of the broadband access device currently corresponding to the wireless access device is consistent with the identification of the broadband access device bound to the wireless access device, thereby controlling the position of the wireless access device propcrly.

## Description

### FIELD OF THE TECHNOLOGY

The present invention relates to the field of communication technology, and more particularly to a position detection method, a position detection system, and a position detection device.

### BACKGROUND OF THE INVENTION

Among the existing networks, the wired network achieves a high speed and high stability, and the wireless network is flexible and convenient. In order to merge the respective advantages of the wired network and the wireless network and utilize the existing network resources in a better way, a wireless access device is proposed for connecting the wireless network with the wired network, so as to enable a user terminal to have a capability of directly visiting the Internet. However, since certain wireless access devices have characteristics of being small, light, portable, plug-and-play, and the like, the operator expects to properly control using positions of the wireless access devices when the wireless access devices are operated, thereby preventing the wireless access devices from being used at positions that are not permitted by the operator.

In order to properly control the using positions of the wireless access device, a position detection method has been published in the prior art, in which a legal position identification of a macro cell where a wireless access device is permitted to be located is configured in the case that macro cells are divided according to the coverage range of network signals. Specifically, when the wireless access device is located within a coverage range of a macro cell, the wireless access device can detect the macro cell and receive a system message of the macro cell. The wireless access device acquires a position identification of the macro cell where it is located by resolving the system message, and compares the position identification of the macro cell where it is located with the legal position identification of the macro cell that is permitted, so as to determine whether the current position thereof is legal, and report a determination result to the operator, so that the operator is enabled to control the using position of the wireless access device.

The prior art has the following defects.

Due to the instable network signals, the wireless access device may sometimes detect the macro cell, and sometimes fail to detect the macro cell, and the macro cells detected each time are not definitely the same, which all affect the detection result. As a result, the operators' control on the wireless access devices deviates, thereby causing troubles for users of the wireless access devices. Moreover, since the macro cell covers a large area, if the wireless access device makes movement within the same macro cell, the method in the prior art cannot detect a position change of the wireless access device, so that an accurate control on the using position of the wireless access device can not be exercised, thereby influencing the economic benefits of the operator.

### SUMMARY OF THE INVENTION

In order to prevent the user from using a wireless access device at positions that are not permitted by an operator and enable the operator to restrict using positions of the wireless access device, the present invention is directed to a position detection method, a position detection system, and a position detection device. The technical solutions of the present invention are described as follows.

In one aspect, the present invention provides a position detection method. The method includes the following steps.

Address information of a broadband access device currently corresponding to a wireless access device is acquired.

The address information is converted into an identification of the broadband access device currently corresponding to the wireless access device.

It is determined whether the identification of the broadband access device currently corresponding to the wireless access device is consistent with an identification of a broadband access device bound to the wireless access device.

If yes, a current position of the wireless access device is legal.

In another aspect, the present invention provides a position detection system.

The position detection system includes a wireless access device, an access gateway, and a position detection device.

The wireless access device is adapted to acquire address information of a broadband access device currently corresponding to the wireless access device, and report the address information to the access gateway.

The access gateway is adapted to convert the address information sent by the wireless access device into an identification of the broadband access device currently corresponding to the wireless access device, and report the identification of the broadband access device currently corresponding to the wireless access device to the position detection device.

The position detection device is adapted to acquire the identification of the broadband access device currently corresponding to the wireless access device reported by the access gateway, and determine whether the identification of the broadband access device currently corresponding to the wireless access device is consistent with an identification of a broadband access device bound to the wireless access device; and if yes, a current position of the wireless access device is legal.

The present invention further provides a wireless access device. The wireless access device includes an acquiring module and a reporting module.

The acquiring module is adapted to acquire address information of a broadband access device currently corresponding to a wireless access device.

The reporting module is adapted to report the address information of the broadband access device currently corresponding to the wireless access device acquired by the acquiring module.

The present invention further provides an access gateway. The access gateway includes a converting module and a reporting module.

The converting module is adapted to convert address information sent by a wireless access device into an identification of a broadband access device currently corresponding to the wireless access device.

The reporting module is adapted to report the identification of the broadband access device currently corresponding to the wireless access device.

The present invention further provides a position detection device. The position detection device includes an acquiring module and a determining module.

The acquiring module is adapted to acquire an identification of a broadband access device currently corresponding to a wireless access device reported by an access gateway.

The determining module is adapted to determine whether the identification of the broadband access device currently corresponding to the wireless access device is consistent with an identification of a broadband access device bound to the wireless access device.

The technical solution provides the following benefits.

In the embodiments of the present invention, an identification of a broadband access device is utilized to bind the wireless access device, and it is determined whether an identification of a broadband access device currently corresponding to the wireless access device is consistent with the identification of the broadband access device bound to the wireless access device, thereby detecting a using position of the wireless access device. Accordingly, the operator is enabled to properly control the using position of the wireless access device with a high control precision. Thus, the present invention not only prevents the user from using the wireless access device at positions that are not permitted by the operator, but also well protects the benefits of the operator.

### BRIEF DESCRIPTION OF THE DRAWINGS

To illustrate the technical solution according to the embodiments of the present invention more clearly, the accompanying drawings for describing the embodiments are introduced briefly below. Apparently, the accompanying drawings in the following description are only some embodiments of the present invention, and persons of ordinary skill in the art can derive other drawings from the accompanying drawings without creative efforts.
FIG. 1 is a flow chart of a position detection method according to a first embodiment of the present invention;
FIG. 2 is a schematic view of a first position detection method according to a second embodiment of the present invention;
FIG. 3 is a schematic view of a second position detection method according to the second embodiment of the present invention;
FIG. 4 is a schematic view of a third position detection method according to the second embodiment of the present invention;
FIG. 5 is a schematic view of a fourth position detection method according to the second embodiment of the present invention;
FIG. 6 is a schematic structural view of a position detection system according to a third embodiment of the present invention;
FIG. 7 is a schematic structural view of a wireless access device according to a fourth embodiment of the present invention;
FIG. 8 is a schematic structural view of an access gateway according to a fifth embodiment of the present invention; and
FIG. 9 is a schematic structural view of a position detection device according to a sixth embodiment of the present invention.

### DETAILED DESCRIPTION OF THE EMBODIMENTS

To make the technical solution, objectives and merits of the present invention clearer, the following describes the embodiments of the present invention in detail with reference to accompanying drawings.

### First Embodiment

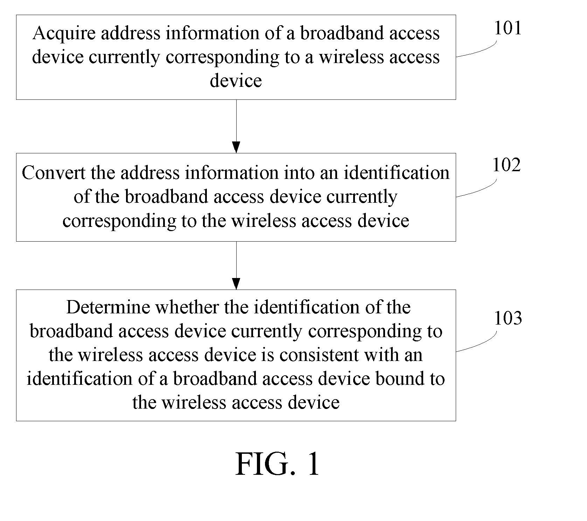

Referring to FIG. 1, in an embodiment, a position detection method based on a broadband access network is provided, which includes the following steps.

In Step 101, address information of a broadband access device currently corresponding to a wireless access device is acquired.

In Step 102, the address information is converted into an identification of the broadband access device currently corresponding to the wireless access device.

In Step 103, it is determined whether the identification of the broadband access device currently corresponding to the wireless access device is consistent with an identification of a broadband access device bound to the wireless access device.

If yes, a current position of the wireless access device is legal.

In this embodiment, a fixed identification of a broadband access device is utilized to bind the wireless access device, and it is determined whether the identification of the broadband access device currently corresponding to the wireless access device is consistent with the identification of the broadband access device bound to the wireless access device, thereby determining whether the current position of the wireless access device is legal. Through the method in this embodiment, not only the using position of the wireless access device can be accurately detected to enable the operator to control the wireless access device, but also the users can be effectively prevented from using the wireless access device at positions that are not permitted by the operator, thereby well protecting the economic benefits of the operator.

### Second Embodiment

In this embodiment, a position detection method is provided, which is applicable to various wireless access devices, including an access point (AP), and other home base stations or small base stations. In the position detection method of this embodiment, according to different identifications of broadband access devices, the wireless access device may adopt different binding manners. According to the specific identification of the broadband access device, the wireless access device in this embodiment is, for example, an AP, and the position detection device is, for example, an AP home register (AHR), and the position detection method is described blow in detail.

Taking a broadband access device as a digital subscriber line (DSL) modem for example, a port identification of the DSL Modem corresponding to the AP when the AP subscribes to the network is taken as an identification of a broadband access device bound to the AP, and is stored in the AHR. According to such a binding manner, an access gateway in this embodiment not only can be connected to a broadband access network via an interface, but also can query through the interface to obtain the port identification of the DSL Modem corresponding to the AP when the AP accesses the network.

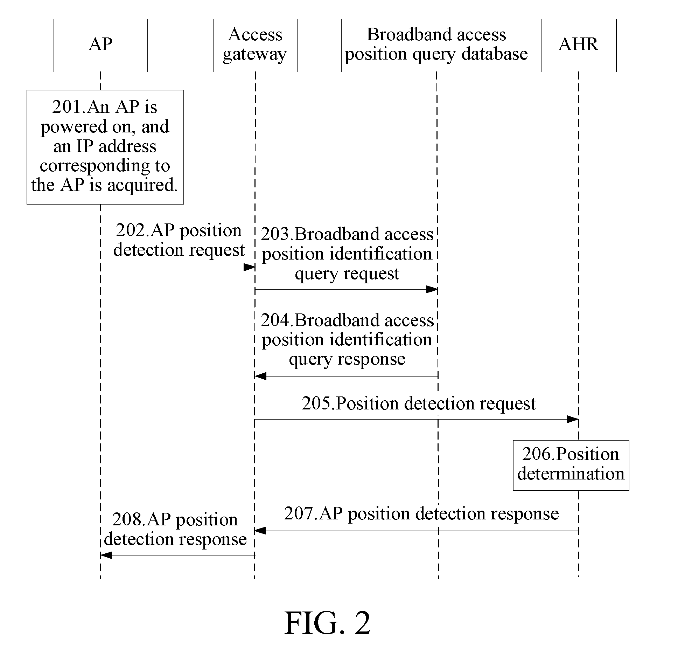

Referring to FIG. 2, the position detection method in this embodiment includes the following steps.

In Step 201, when an AP is powered on, an external IP address of the AP is acquired, in which the external IP address is an IP address of a DSL Modem corresponding to the AP, and is dynamic address information.

In Step 202, the AP sends a position detection request message to an access gateway, in which the position detection request message carries the external IP address of the AP, that is, the dynamic address information of the broadband access device currently corresponding to the AP.

In Step 203, after receiving the position detection request message sent by the AP, the access gateway sends a broadband access position identification query request to a port query database of a broadband access device according to the external IP address of the AP carried in the position detection request message, so as to query the port identification of the DSL Modem corresponding to the AP.

In Step 204, according to the external IP address provided by the access gateway, a corresponding relation between the IP address and the port identification is queried from the port query database of the broadband access device, so as to obtain the port identification of the broadband access device corresponding to the external IP address, and the port identification is carried in a broadband access position identification query response for being sent to the access gateway.

The port query database of the broadband access device stores port identifications of broadband access devices corresponding to different IP addresses, and the port query database of the broadband access device is provided by an operator.

In Step 205, the access gateway acquires the port identification of the broadband access device carried in the broadband access position identification query response, and reports the port identification to the AHR as the identification of the broadband access device currently corresponding to the AP.

In Step 206, the AHR compares the identification of the broadband access device bound to the AP stored in the AHR itself with the identification of the broadband access device currently corresponding to the AP carried in the detection request message sent by the access gateway, and determines whether the two identifications are consistent.

If the two identifications are determined to be consistent, it indicates that a current position of the AP is a legal using position; if the two identifications are determined to be inconsistent, it indicates that the current position of the AP is an illegal using position, and in this case, the operator may take certain measures to solve the problem, for example, prohibiting the AP from accessing the network.

In Step 207, the AHR sends a position detection response message carrying a determination result to the access gateway.

Specifically, if the determination result is that the two identifications are consistent, the position detection response message carries a success identification; and if the determination result is that the two identifications are inconsistent, the position detection response message carries a failure identification and a cause value for the failure. The cause value for the failure may indicate that the identification of the broadband access device currently corresponding to the AP carried in the position detection request message is inconsistent with the identification of the broadband access device bound to the AP stored in the AHR, and may also indicate that the identification of the broadband access device currently corresponding to the AP carried in the position detection request message is invalid.

In Step 208, the access gateway forwards the received position detection response message carrying the determination result made by the AHR to the AP.

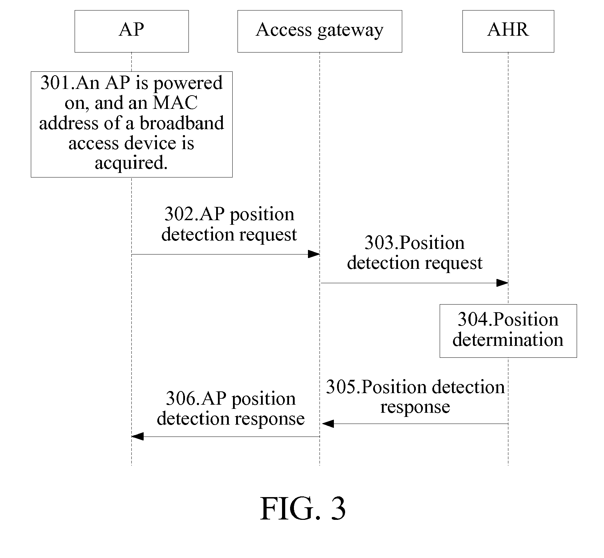

Besides using the port identification of the broadband access device corresponding to the AP to bind the AP, static address information of the broadband access device corresponding to the AP may be further used to bind the AP, and the static address information may be a Media Access Control (MAC) address, an IP address, or a static IP address pool of the broadband access device. Each hardware device is allocated with a unique hardware address when leaving the factory, that is, MAC address, so that the MAC address of the broadband access device corresponding to the AP is utilized to bind the AP. The DSL Modem is still taken as an example of the broadband access device, an MAC address of the DSL Modem corresponding to the AP when the AP subscribes to the network is taken as an identification of a broadband access device bound to the AP, and the identification of the broadband access device is stored in the AHR. Referring to FIG. 3, in view of such a binding manner, the position detection method specifically includes the following steps.

In Step 301, when the AP is powered on, the MAC address of the DSL Modem corresponding to the AP is acquired, and the MAC address is taken as an identification of a broadband access device currently corresponding to the AP.

In Step 302, the AP sends a position detection request message to the access gateway, in which the position detection request message carries the identification of the broadband access device currently corresponding to the AP, that is, the MAC address of the DSL Modem corresponding to the AP.

In Step 303, the access gateway reports the identification of the broadband access device currently corresponding to the AP to the AHR through the position detection request message.

In Step 304, the AHR compares the identification of the broadband access device bound to the AP stored in the AHR itself with the identification of the broadband access device currently corresponding to the AP carried in the position detection request message sent by the access gateway, and determines whether the two identifications are consistent.

If the two identifications are determined to be consistent, it indicates that a current position of the AP is a legal using position; if the two identifications are determined to be inconsistent, it indicates that the current position of the AP is an illegal using position, and in this case, the operator may take certain measures to solve the problem, for example, prohibiting the AP from accessing the network.

In Step 305, the AHR sends a position detection response message carrying a determination result to the access gateway.

Specifically, if the determination result is that the two identifications are consistent, the position detection response message carries a success identification; and if the determination result is that the two identifications are inconsistent, the position detection response message carries a failure identification and a cause value for the failure. The cause value for the failure may indicate that the identification of the broadband access device currently corresponding to the AP carried in the position detection request message is inconsistent with the identification of the broadband access device bound to the AP stored in the AHR, and may also indicate that the identification of the broadband access device currently corresponding to the AP carried in the position detection request message is invalid.

In Step 306, the access gateway forwards the received position detection response message carrying the determination result made by the AHR to the AP.

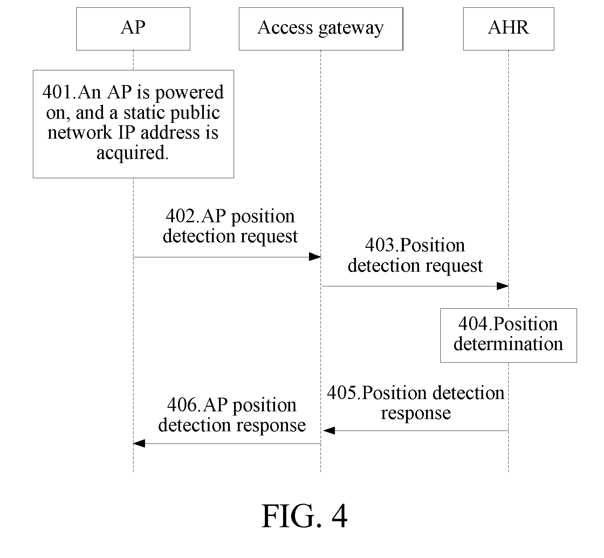

Referring to FIG. 4, when the operator allocates a static IP address for each broadband access device, the static IP address of the broadband access device corresponding to the AP may be utilized to bind the AP. The DSL Modem is still taken as an example of the broadband access device, a static IP address of the DSL Modem corresponding to the AP when the AP subscribes to the network is taken as an identification of a broadband access device bound to the AP, and the identification of the broadband access device is stored in the AHR. In view of such a binding manner, the position detection method specifically includes the following steps.

In Step 401, when the AP is powered on, the static IP address of the DSL Modem corresponding to the AP is acquired, and the static IP address is taken as an identification of a broadband access device currently corresponding to the AP.

In Step 402, the AP sends a position detection request message to the access gateway, in which the position detection request message carries the identification of the broadband access device currently corresponding to the AP, that is, the static IP address of the DSL Modem corresponding to the AP.

In Step 403, the access gateway reports the identification of the broadband access device currently corresponding to the AP to the AHR through the position detection request message.

In Step 404, the AHR compares the identification of the broadband access device bound to the AP stored in the AHR itself with the identification of the broadband access device currently corresponding to the AP carried in the position detection request message sent by the access gateway, and determines whether the two identifications are consistent.

If the two identifications are determined to be consistent, it indicates that a current position of the AP is a legal using position; if the two identifications are determined to be inconsistent, it indicates that the current position of the AP is an illegal using position, and in this case, the operator may take certain measures to solve the problem, for example, prohibiting the AP from accessing the network.

In Step 405, the AHR sends a position detection response message carrying a determination result to the access gateway.

Specifically, if the determination result is that the two identifications are consistent, the position detection response message carries a success identification; and if the determination result is that the two identifications are inconsistent, the position detection response message carries a failure identification and a cause value for the failure. The cause value for the failure may indicate that the identification of the broadband access device currently corresponding to the AP carried in the position detection request message is inconsistent with the identification of the broadband access device bound to the AP stored in the AHR, and may also indicate that the identification of the broadband access device currently corresponding to the AP carried in the position detection request message is invalid.

In Step 406, the access gateway forwards the received position detection response message carrying the determination result made by the AHR to the AP.

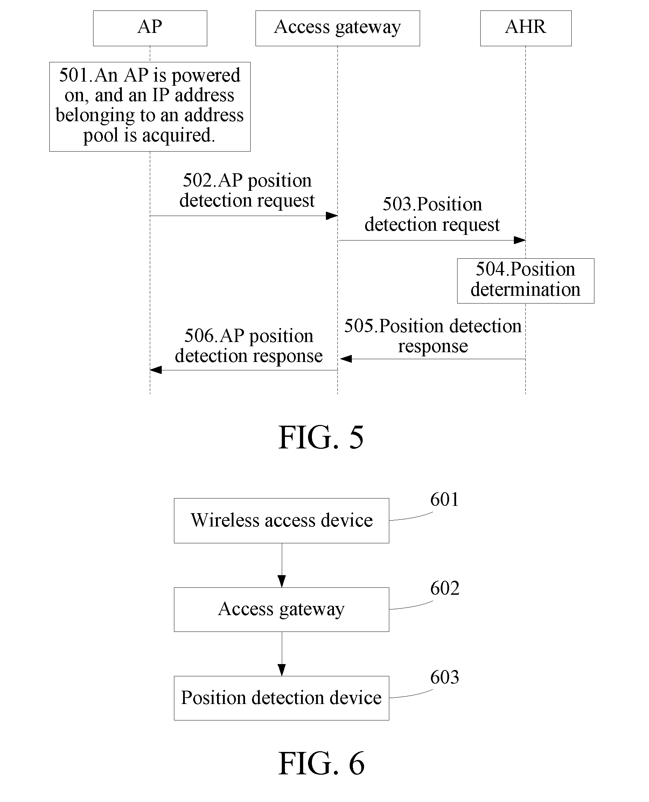

Besides the above several binding manners, a static IP address pool may also be adopted as a binding manner, so as to realize the position detection for the AP. Referring to FIG. 5, a broadband operator allocates a static IP address pool for several broadband access devices, and each broadband access device can only acquire a static IP address from the address pool. The operator acquires a static IP address pool corresponding to the AP when the AP subscribes to the network, and takes the static IP address pool as an identification of a broadband access device bound to the AP. The DSL Modem is still taken as an example of the broadband access device, and the method in this embodiment specifically includes the following steps.

In Step 501, when the AP is powered on, a static IP address of the AP is acquired.

The static IP address of the AP here is an address in the address pool allocated to the DSL Modem, and the static IP address of the AP is taken as an identification of a broadband access device currently corresponding to the AP.

In Step 502, the AP sends a position detection request message to the access gateway, in which the position detection request message carries the identification of the broadband access device currently corresponding to the AP, that is, the static IP address in the static IP address pool of the DSL Modem corresponding to the AP.

In Step 503, the access gateway reports the identification of the broadband access device currently corresponding to the AP to the AHR through the position detection request message.

In Step 504, the AHR compares the identification of the broadband access device bound to the AP stored in the AHR itself with the identification of the broadband access device currently corresponding to the AP carried in the position detection request message sent by the access gateway, and determines whether the two identifications are consistent.

If the two identifications are determined to be consistent, it indicates that a current position of the AP is a legal using position; if the two identifications are determined to be inconsistent, it indicates that the current position of the AP is an illegal using position, and in this case, the operator may take certain measures to solve the problem, for example, prohibiting the AP from accessing the network.

In Step 505, the AHR sends a position detection response message carrying a determination result made by the AHR to the access gateway.

Specifically, if the determination result is that the two identifications are consistent, the position detection response message carries a success identification; and if the determination result is that the two identifications are inconsistent, the position detection response message carries a failure identification and a cause value for the failure. The cause value for the failure may indicate that the identification of the broadband access device currently corresponding to the AP carried in the position detection request message is inconsistent with the identification of the broadband access device bound to the AP stored in the AHR, and may also indicate that the identification of the broadband access device currently corresponding to the AP carried in the position detection request message is invalid.

In Step 506, the access gateway forwards the position detection response message sent by the AHR to the AP.

In this embodiment, the position detection method in embodiments of the present invention is described merely by taking the DSL Modem as an example of the broadband access device, which may be also described by taking Fiber to the Home (FTTH) as an example. In the method of this embodiment of the present invention, various identifications of broadband access devices may be utilized to bind the wireless access device, and the specific broadband access device is not restricted in this embodiment of the present invention.

Thus, in the method according to this embodiment of the present invention, the identification of the broadband access device currently corresponding to the AP is acquired when the AP is powered on; the access gateway reports the identification of the broadband access device currently corresponding to the AP to the AHR; the AHR compares the identification of the broadband access device currently corresponding to the AP with the identification of the broadband access device bound to the AP stored in the AHR, and determines whether the two identifications are consistent, thereby realizing the position detection and the position restriction of the AP, and preventing the user from using the AP at positions that are not permitted by the operator.

### Third Embodiment

Referring to FIG. 6, in this embodiment, a position detection system is provided.

The position detection system includes a wireless access device 601, an access gateway 602, and a position detection device 603.

The wireless access device 601 is adapted to acquire address information of a broadband access device currently corresponding to the wireless access device 601, and report the address information to the access gateway.

The access gateway 602 is adapted to convert the address information reported by the wireless access device into an identification of the broadband access device currently corresponding to the wireless access device, and report the identification of the broadband access device currently corresponding to the wireless access device to the position detection device.

The position detection device 603 is adapted to acquire the identification of the broadband access device currently corresponding to the wireless access device reported by the access gateway, and determine whether the identification of the broadband access device currently corresponding to the wireless access device is consistent with an identification of a broadband access device bound to the wireless access device; and if yes, a current position of the wireless access device is legal.

The wireless access device 601 is specifically adapted to acquire dynamic address information of the broadband access device currently corresponding to the wireless access device 601, and report the dynamic address information to the access gateway 602.

In this case, the access gateway 602 is specifically adapted to receive the dynamic address information sent by the wireless access device 601, query to obtain a port identification of the broadband access device currently corresponding to the wireless access device 601 according to the dynamic address information, and take the port identification as the identification of the broadband access device currently corresponding to the wireless access device 601 for being reported to the position detection device 603.

Correspondingly, the identification of the broadband access device bound to the wireless access device 601 is a port identification.

The wireless access device 601 is specifically adapted to acquire static address information of the broadband access device currently corresponding to the wireless access device 601, and report the static address information to the access gateway.

In this case, the access gateway 602 is specifically adapted to receive the static address information sent by the wireless access device 601, and take the static address information as the identification of the broadband access device currently corresponding to the wireless access device 601 for being reported to the position detection device 603.

Correspondingly, the identification of the broadband access device bound to the wireless access device 601 is static address information.

In this embodiment, the position detection device acquires the identification of the broadband access device currently corresponding to the wireless access device reported by the access gateway, and determines whether the identification of the broadband access device currently corresponding to the wireless access device is consistent with the identification of the broadband access device bound to the wireless access device, thereby determining whether the current position of the wireless access device is legal, and realizing the position detection on the wireless access device. Thus, the position detection system of this embodiment further enables the operator to properly control the using position of the wireless access device, and prevents the user from using the wireless access device at positions that are not permitted by the operator.

### Fourth Embodiment

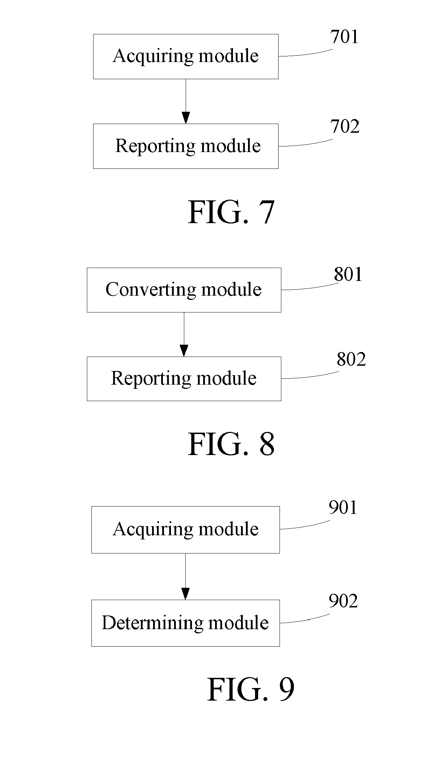

Referring to FIG. 7, in this embodiment, a wireless access device is provided, which includes an acquiring module 701 and a reporting module 702.

The acquiring module 701 is adapted to acquire address information of a broadband access device currently corresponding to the wireless access device.

The reporting module 702 is adapted to report the address information of the broadband access device currently corresponding to the wireless access device acquired by the acquiring module to the access gateway.

The acquiring module 701 is specifically adapted to acquire dynamic address information or static address information of the broadband access device currently corresponding to the wireless access device.

The reporting module 702 is specifically adapted to report the dynamic address information or the static address information of the broadband access device currently corresponding to the wireless access device acquired by the acquiring module to the access gateway.

In the wireless access device of this embodiment, the acquiring module acquires the address of the broadband access device currently corresponding to the wireless access device, and the reporting module reports the address of the broadband access device currently corresponding to the wireless access device acquired by the acquiring module to the access gateway, and thus the position detection device realizes the detection on the current position of the wireless access device, thereby further enabling the operator to properly control the using position of the wireless access device.

### Fifth Embodiment

Referring to FIG. 8, in this embodiment, an access gateway is provided, which includes a converting module 801 and a reporting module 802.

The converting module 801 is adapted to convert address information sent by a wireless access device into an identification of a broadband access device currently corresponding to the wireless access device.

The reporting module 802 is adapted to report the identification of the broadband access device currently corresponding to the wireless access device to the position detection device.

The converting module 801 further includes a first receiving unit, a querying unit, a first converting unit, a second receiving unit, and a second converting unit.

The first receiving unit is specifically adapted to receive dynamic address information sent by the wireless access device.

The querying unit is specifically adapted to query to obtain a port identification of the broadband access device currently corresponding to the wireless access device according to the dynamic address information received by the first receiving unit.

The first converting unit is specifically adapted to convert the port identification obtained by the querying unit through query into the identification of the broadband access device currently corresponding to the wireless access device.

The second receiving unit is specifically adapted to receive static address information sent by the wireless access device.

The second converting unit is specifically adapted to convert the static address information received by the second receiving unit into the identification of the broadband access device currently corresponding to the wireless access device.

In the access gateway of this embodiment, the address information of the broadband access device currently corresponding to the wireless access device reported by the wireless access device is converted into the identification of the broadband access device currently corresponding to the wireless access device, and the reporting module reports the identification of the broadband access device currently corresponding to the wireless access device to the position detection device, and thus the position detection device realizes the detection on the current position of the wireless access device, thereby further enabling the operator to properly control the using position of the wireless access device.

### Sixth Embodiment

Referring to FIG. 9, in this embodiment, a position detection device is provided, which includes an acquiring module 901 and a determining module 902.

The acquiring module 901 is adapted to acquire an identification of a broadband access device currently corresponding to a wireless access device reported by an access gateway.

The determining module 902 is adapted to determine whether the identification of the broadband access device currently corresponding to the wireless access device is consistent with an identification of a broadband access device bound to the wireless access device; and if yes, a current position of the wireless access device is legal.

When the acquiring module 901 is specifically adapted to acquire a port identification of the broadband access device currently corresponding to the wireless access device sent by the access gateway, the identification of the broadband access device bound to the wireless access device is correspondingly a port identification.

When the acquiring module 901 is specifically adapted to acquire static address information of the broadband access device currently corresponding to the wireless access device sent by the access gateway, the identification of the broadband access device bound to the wireless access device is correspondingly static address information.

In the position detection device in this embodiment, the identification of the broadband access device currently corresponding to the wireless access device reported by the access gateway is acquired, and it is determined whether the identification of the broadband access device currently corresponding to the wireless access device is consistent with the identification of the broadband access device bound to the wireless access device, thereby realizing the detection on the current position of the wireless access device, and further enabling the operator to properly control the using position of the wireless access device.

To sum up, in the position detection method, position detection system, and position detection device provided according to the embodiments of the present invention, a fixed identification of a broadband access device is utilized to bind a wireless access device, and it is determined whether the identification of the broadband access device currently corresponding to the wireless access device is consistent with the identification of the broadband access device bound to the wireless access device, so as to realize the detection on the using position of the wireless access device, thereby enabling the operator to properly control the using position of the wireless access device. Thus, not only the users are prevented from using the wireless access device at positions that are not permitted by the operator, but also the economic benefits of the operator are well protected.

The method, system, and device provided according to the embodiments of the present invention are not only applicable to a Universal Mobile Telecommunications System (UMTS), but also applicable to 3rd Generation Partnership Project (3GPP), 3rd Generation Partnership Project 2 (3GPP2) wireless networks, such as General Packet Radio Service (GPRS), Code Division Multiple Access (CDMA2000), Time Division-Synchronous Code Division Multiple Access (TD-SCDMA), Worldwide Interoperability Microwave Access (WIMAX), Long time evolution (LTE), which are not repeated here.

Some of the steps involved in the embodiments of the present invention may be implemented by software. The software program may be stored in a readable storage medium such as a hard disk or a Compact Disk (CD).

The above descriptions are merely preferred embodiments of the present invention, but not intended to limit the scope of the present invention. Any modification, equivalent replacement, or improvement made without departing from the principle of the present invention should fall within the scope of the present invention.

## Claims

1. A position detection method, comprising:
acquiring address information of a broadband access device currently corresponding to a wireless access device;
converting the address information into an identification of the broadband access device currently corresponding to the wireless access device; and
determining whether the identification of the broadband access device currently corresponding to the wireless access device is consistent with an identification of a broadband access device bound to the wireless access device;
wherein if yes, a current position of the wireless access device is legal.

2. The method according to claim 1, wherein the acquiring the address information of the broadband access device currently corresponding to the wireless access device and the converting the address information into the identification of the broadband access device currently corresponding to the wireless access device comprises:
acquiring dynamic address information of the broadband access device currently corresponding to the wireless access device;
querying to obtain a port identification of the broadband access device currently corresponding to the wireless access device according to the dynamic address information of the broadband access device currently corresponding to the wireless access device, and taking the port identification as the identification of the broadband access device currently corresponding to the wireless access device;
wherein the identification of the broadband access device bound to the wireless access device is a port identification.

3. The method according to claim 1, wherein the acquiring the address information of the broadband access device currently corresponding to the wireless access device and the converting the address information into the identification of the broadband access device currently corresponding to the wireless access device comprises:
acquiring static address information of the broadband access device currently corresponding to the wireless access device;
taking the static address information as the identification of the broadband access device currently corresponding to the wireless access device;
wherein the identification of the broadband access device bound to the wireless access device is static address information.

4. The method according to claim 3, wherein the static address information of the broadband access device currently corresponding to the wireless access device comprises:
a static internet protocol, IP, address pool or a static IP address or a media access control, MAC, address of the broadband access device currently corresponding to the wireless access device.

5. A position detection system, comprising: a wireless access device, an access gateway, and a position detection device, wherein
the wireless access device is adapted to acquire address information of a broadband access device currently corresponding to the wireless access device, and report the address information to the access gateway;
the access gateway is adapted to convert the address information sent by the wireless access device into an identification of the broadband access device currently corresponding to the wireless access device, and report the identification of the broadband access device currently corresponding to the wireless access device to the position detection device; and
the position detection device is adapted to acquire the identification of the broadband access device currently corresponding to the wireless access device reported by the access gateway, and determine whether the identification of the broadband access device currently corresponding to the wireless access device is consistent with an identification of a broadband access device bound to the wireless access device; and if yes, a current position of the wireless access device is legal.

6. The system according to claim 5, wherein
the wireless access device is further adapted to acquire dynamic address information of the broadband access device currently corresponding to the wireless access device, and report the dynamic address information to the access gateway;
the access gateway is further adapted to receive the dynamic address information sent by the wireless access device, query to obtain a port identification of the broadband access device currently corresponding to the wireless access device according to the dynamic address information, and take the port identification as the identification of the broadband access device currently corresponding to the wireless access device for being reported to the position detection device; and
the identification of the broadband access device bound to the wireless access device is a port identification.

7. The system according to claim 5, wherein
the wireless access device is further adapted to acquire static address information of the broadband access device currently corresponding to the wireless access device, and report the static address information to the access gateway;
the access gateway is further adapted to receive the static address information sent by the wireless access device, and take the static address information as the identification of the broadband access device currently corresponding to the wireless access device for being reported to the position detection device; and
the identification of the broadband access device bound to the wireless access device is static address information.

8. A wireless access device, comprising:
an acquiring module, adapted to acquire address information of a broadband access device currently corresponding to the wireless access device; and
a reporting module, adapted to report the address information of the broadband access device currently corresponding to the wireless access device acquired by the acquiring module.

9. The wireless access device according to claim 8, wherein
the acquiring module is further adapted to acquire dynamic address information of the broadband access device currently corresponding to the wireless access device; and
the reporting module is further adapted to report the dynamic address information of the broadband access device currently corresponding to the wireless access device acquired by the acquiring module.

10. The wireless access device according to claim 8, wherein
the acquiring module is further adapted to acquire static address information of the broadband access device currently corresponding to the wireless access device; and
the reporting module is further adapted to report the static address information of the broadband access device currently corresponding to the wireless access device acquired by the acquiring module.

11. An access gateway, comprising:
a converting module, adapted to convert address information sent by a wireless access device into an identification of a broadband access device currently corresponding to the wireless access device; and
a reporting module, adapted to report the identification of the broadband access device currently corresponding to the wireless access device converted by the converting module.

12. The access gateway according to claim 11, wherein the converting module further comprises:
a first receiving unit, adapted to receive dynamic address information sent by the wireless access device;
a querying unit, adapted to query to obtain a port identification of the broadband access device currently corresponding to the wireless access device according to the dynamic address information received by the receiving unit; and
a converting unit, adapted to convert the port identification obtained by the querying unit through query into the identification of the broadband access device currently corresponding to the wireless access device.

13. The access gateway according to claim 11, wherein the converting module further comprises:
a second receiving unit, adapted to receive static address information sent by the wireless access device; and
a converting unit, adapted to convert the static address information received by the second receiving unit into the identification of the broadband access device currently corresponding to the wireless access device.

14. A position detection device, comprising:
an acquiring module, adapted to acquire an identification of a broadband access device currently corresponding to a wireless access device reported by an access gateway; and
a determining module, adapted to determine whether the identification of the broadband access device currently corresponding to the wireless access device is consistent with an identification of a broadband access device bound to the wireless access device.

15. The position detection device according to claim 14, wherein
the acquiring module is further adapted to acquire a port identification of the broadband access device currently corresponding to the wireless access device sent by the access gateway; and
the identification of the broadband access device bound to the wireless access device is a port identification.

16. The position detection device according to claim 15, wherein
the acquiring module is further adapted to acquire static address information of the broadband access device currently corresponding to the wireless access device sent by the access gateway; and
the identification of the broadband access device bound to the wireless access device is static address information.
